(19) Europäisches Patentamt
European Patent Office
Office européen des brevets

(11) EP 4 625 002 A1

(12) EUROPEAN PATENT APPLICATION

(43) Date of publication:
**01.10.2025 Bulletin 2025/40**

(21) Application number: **25154535.6**

(22) Date of filing: **28.01.2025**

(51) International Patent Classification (IPC):
***G01W 1/10*** *(2006.01)* ***G06N 3/00*** *(2023.01)*
***G06T 7/00*** *(2017.01)* ***G06V 10/00*** *(2022.01)*
***G01W 1/00*** *(2006.01)*

(52) Cooperative Patent Classification (CPC):
**G01W 1/10; G06N 3/00; G06N 3/045; G06N 7/01; G06N 20/20; G06V 10/00;** G01W 2001/006; G01W 2203/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.03.2024 IN 202411025184**
**19.07.2024 US 202418778348**

(71) Applicant: **ARINC Incorporated**
**Annapolis, MD 21401 (US)**

(72) Inventors:
- **XAVIER, Jerrin**
  **560064 Allappuzha (IN)**
- **BALACHANDRAN, Vishnu**
  **673029 Kozhikode (IN)**

(74) Representative: **Dehns**
**10 Old Bailey**
**London EC4M 7NG (GB)**

# (54) WEATHER PREDICTION IMPROVEMENTS

(57) Systems, devices, methods, and computer-readable media provide improved weather predictions. A weather prediction system (100) includes a cross-attention operator (118) configured to (i) receive tokens (130, 132, 134) representing pixels of images (106, 108, 110), the images includes images of different types and (ii) produce, based on the tokens, respective sequences of weighted tokens (136), one sequence of weighted tokens for each image of the images (106, 108, 110), and a Bayesian ensemble model (120) configured to (i) receive a weather prediction (124) from a physics-based weather model (104) and the weighted tokens (136) and (ii) produce an updated weather prediction (126) based on a combination of the weather prediction (124) and the weighted tokens (136).

100
106
IMAGE TYPE 1
108
IMAGE TYPE 2
110
IMAGE TYPE 3
128
INTERPOLATION
112
114
116
TRANS-FORMER
TRANS-FORMER
TRANS-FORMER
102
130
132
118
134
CROSS-ATTENTION
WEIGHTED TOKENS
136
138
DECODER NETWORK
WEATHER PREDICTION
140
104
120
UPDATED WEATHER PREDICTION
122
PHYSICS-BASED WEATHER MODEL
WEATHER PREDICTION
124
BAYESIAN ENSEMBLE MODEL
126
FLIGHT PLAN OPTIMIZER
WEATHER AGGREGATOR
FIG. 1

EP 4 625 002 A1

## Description

This patent application claims the benefit of Indian Provisional Patent Application No. 202411025184, filed March 28, 2024, which is incorporated by reference herein in its entirety.

### TECHNICAL FIELD

Embodiments regard improving weather predictions. Some embodiments leverage transformers and cross-attention operators to improve a weather prediction from a legacy physics-based weather model.

### BACKGROUND

Weather predictions are notoriously inaccurate. Improved weather predictions can help improve life for many people.

### SUMMARY

According to a first aspect of the invention, there is provided a weather prediction system comprising: a cross-attention operator configured to (i) receive tokens representing pixels of images, the images includes images of different types and (ii) produce, based on the tokens, respective sequences of weighted tokens, one sequence of weighted tokens for each image of the images; and a Bayesian ensemble model configured to (i) receive a weather prediction from a physics-based weather model and the weighted tokens and (ii) produce an updated weather prediction based on a combination of the weather prediction and the weighted tokens.

Optionally, the types include two or more of (i) a visible image, (ii) a radar image, (iii) a lidar image, or (iv) an infrared image.

Optionally, the types include the visible image, the radar image, and the lidar image. Further optionally, the tokens of the visible image represent type and thickness of cloud cover, the tokens of the radar image represent amount of precipitation and direction of clouds associated with the precipitation, and the tokens of the lidar image represent altitude and aerosol concentration.

Optionally, the system further comprises a transformer for each image, the transformer configured to generate, based on a received image of the images, the tokens, the tokens part of respective sequences of tokens, wherein the cross-attention operator is configured to receive a sequence of tokens for each image and generate the weighted tokens based on all sequences of tokens.

Optionally, the system comprises an interpolation operator configured to determine a pixel value for an image of the images that is undefined, empty, or otherwise not available.

Optionally, the transformer is configured to standardize all tokens of all sequences of tokens.

Optionally, the system further comprises a flight plan optimizer configured to receive the updated weather prediction and generate a flight plan based on the updated weather prediction.

Optionally, the images include a field of view of a geographic region that overlaps with the weather prediction.

According to a second aspect of the invention, there is provided a method for improved weather prediction comprising: receiving, by a cross-attention operator, tokens of images including images of different types; producing, by the cross-attention operator, respective sequences of weighted tokens, one sequence of weighted tokens for each image of the images; receiving, by a Bayesian ensemble model, a weather prediction from a physics-based weather model and the weighted tokens; and producing, by the Bayesian ensemble model, an updated weather prediction based on a combination of the weather prediction and the weighted tokens.

Optionally, the types include two or more of (i) a visible image, (ii) a radar image, (iii) a lidar image, or (iv) an infrared image.

Optionally, the types include the visible image, the radar image, and the lidar image. Further optionally, tokens of the visible image represent type and thickness of cloud cover, tokens of the radar image represent amount of precipitation and direction of clouds associated with the precipitation, and tokens of the lidar image represent altitude and aerosol concentration

Optionally, the method further comprises generating, by a transformer for each image, a sequence of tokens based on a received image of the images; receiving, by the cross-attention operator, a sequence of tokens for each image; and generating, by the cross-attention operator, the weighted tokens based on all sequences of tokens.

Optionally, the method further comprises determining, by an interpolation operator, a pixel value for an image of the images that is undefined, empty, or otherwise not available.

Optionally, the method further comprises standardizing, by the transformer, all tokens of all sequences of tokens.

Optionally, the method further comprises receiving, by a flight plan optimizer, the updated weather prediction and generating, by the flight plan optimizer, a flight plan based on the updated weather prediction.

Optionally, the images include a field of view of a geographic region that overlaps with the weather prediction.

According to a third aspect of the invention, there is provided a non-transitory machine-readable medium including instructions that, when executed by a machine, cause the machine to perform a method according to the second aspect of the invention.

It will be appreciated that some or all of the above optional features may be combined in various embodiments without departing from the scope of the invention, unless explicitly stated otherwise.

## BRIEF DESCRIPTION OF DRAWINGS

Certain exemplary embodiments will now be described in greater detail by way of example only and with reference to the accompanying drawings in which:

FIG. 1 illustrates, by way of example, a diagram of a system for improving a weather prediction.

FIG. 2 illustrates, by way of example, a diagram of a method for improved weather prediction.

FIG. 3 is a block diagram of an example of an environment including a system for neural network (NN) training.

FIG. 4 illustrates, by way of example, a block diagram of a machine in the example form of a computer system within which instructions, for causing the machine to perform any one or more of the methods or techniques discussed herein, may be executed.

## DETAILED DESCRIPTION

The following description and the drawings sufficiently illustrate teachings to enable those skilled in the art to practice them. Other embodiments may incorporate structural, logical, electrical, process, and other changes. Portions and features of some examples may be included in, or substituted for, those of other examples. Teachings set forth in the claims encompass all available equivalents falling within the scope of those claims.

Embodiments may be implemented in one or a combination of hardware, firmware and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. Some embodiments may include one or more processors and may be configured with instructions stored on a computer-readable storage device.

Embodiments improve accuracy of weather predictions. The accuracy can be improved by a device, system, or method discussed herein. A device, system, or method can include identifying, by a transformer (e.g., attention) or other feature mechanism, pertinent (e.g., most pertinent) feature of different sources of aerial imagery. The pertinent features from the different sources of aerial imagery (the features identified by the transformers) can be jointly analyzed and evaluated by a cross-attention operator. The cross-attention operation assesses a significance of a given feature across the set of features that span all the different sources. The cross-attention operation can provided a weighted set of features where respective weights of the weighted set indicate the significance of a corresponding feature. A Bayesian ensemble model can receive the weighted set of features and output from a physics-based weather model. The output can include a weather prediction. The Bayesian ensemble model can combine the output and weighted set of features to improve the output of the physics-based weather model. Embodiments determine what is most important, with regards to weather prediction and features of the images, and then alter the weather prediction based on the features of the images.

Embodiments improve weather prediction by fusing physics-based and Deep Learning (ML) models (a Bayesian ensemble and attention are DL structures), such as for Nowcasting in flight management systems (FMS) as a Service Weather Aggregator, improves the accuracy of weather prediction. The DL structures use recent (e.g., real-time or near real-time) image data to inform a weather prediction. The combination of the physics-based model and the DL structures can help optimize flight planning and weather prediction with unprecedented precision. The precision can be provided by a blend of physics-based methodologies and cutting-edge DL techniques to forecast short-term weather phenomena, specifically targeting rainfall and hydrometeors, with enhanced accuracy and reliability.

Embodiments leverage an extensive suite of data sources, such as satellite imagery, aircraft-mounted weather radar, light detection and ranging (LiDAR) sensors, a combination thereof or the like. This integration ensures a rich dataset, providing a holistic view of atmospheric conditions critical for weather prediction. The weather prediction can then be used for flight path optimization, general user information (e.g., through an app or other forecast tool), water use decisions, crop management, or the like.

Embodiments can include a DL model equipped with one or more cross-attention mechanisms. The DL model analyzes, in real-time or near real-time, multi-source data to identify and fuse features, such as by cross-attention, across the various image types. The cross-attention mechanism enables the DL model to discern and prioritize relevant information from different data streams, thereby enhancing the predictive accuracy of short-term weather events.

Embodiments include a Bayesian ensemble model that combines features from the cross-attention with a weather prediction to improve the weather prediction. This method synergizes predictions from both physics-based and DL models, considering the inherent uncertainties of each. The result is a more robust and reliable weather forecast, which can help make better informed decisions in flight management.

An advantage provided by combining a physics-based weather prediction with real-time imagery to improve the weather prediction include optimized trajectory planning, which can significantly improve aircraft operation and air traffic management. Another advantage provided by the improved forecast is providing a higher resolution forecast in real time or near real time. The improved forecast can empower airlines and aircrafts using flight management as a service (FMSaaS) with superior decision-making capabilities. The improved forecast also improves pedestrian weather consumers with better decision making in their daily lives. This helps ensures safer, more efficient flight paths, enhanced operational stability, and safer pedestrian users.

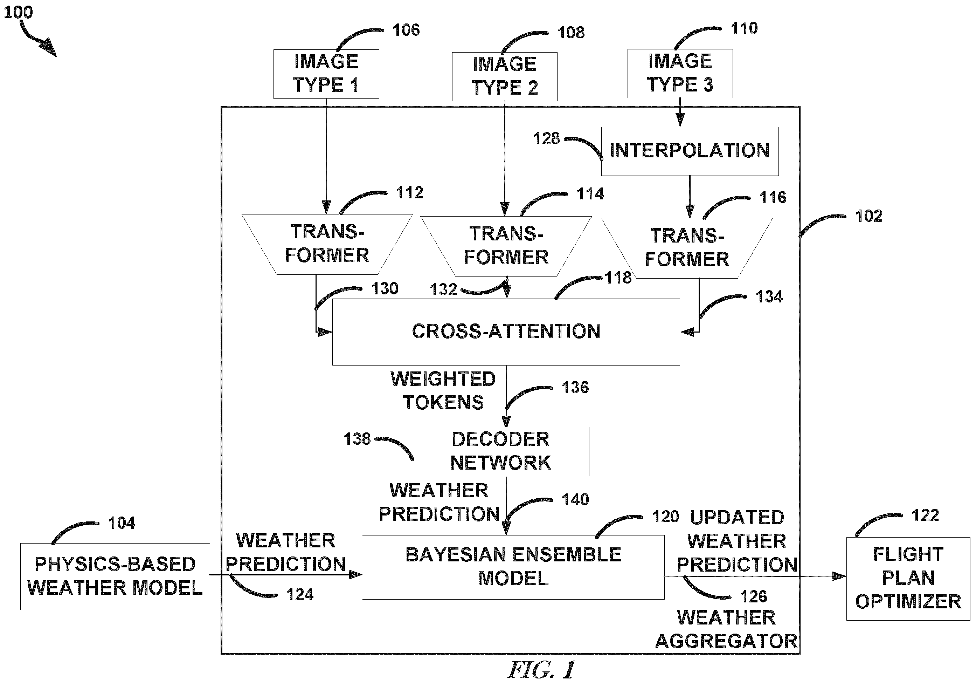

FIG. 1 illustrates, by way of example, a diagram of an embodiment of a system 100 for improving a weather prediction. The improved weather prediction can help improve safety and efficiency of plans, such as flight plans, pedestrian plans, or the like that rely on the weather prediction. The safety and efficiency can be in terms of energy expended, damage to persons or objects, or the like.

The system 100 as illustrated includes a weather aggregator 102. The weather aggregator 102 receives a weather prediction 124 from a physics-based weather model 104. The weather aggregator 102 receives images 106, 108, 110 from various sources. The weather prediction 124 can regard a same geographic region that is within view of the images 106, 108, 110. That is, each of the images 106, 108, 110 and the weather prediction 124 include a view of or regard a same set of latitude and longitude coordinates. A surface of the Earth need not be in view in the images 106, 108, 110 as the atmosphere above the surface of the Earth may be the subject of one or more of the images 106, 108, 110.

The various types of sensors that generate images 106, 108, 110 or other data can include electro-optical (EO) images, grayscale images, satellite images, radio frequency detection and ranging (RADAR) images, light detection and ranging (LiDAR) images, infrared images, images generated based on hygrometer data (e.g., used for air humidity, which helps assess the likelihood of fog formation and contributes to icing risk calculations), ice detectors (ice detector readings provide precise, real-time information about the presence and potentially the rate of ice accumulation at specific locations along the aircraft's flight path. This is a much more direct indicator of atmospheric icing conditions than inferring icing from other sensor types), wind sensors, such as vanes or pitot tubes, weather radar networks (a network of ground-based weather radars provides a larger-scale view of precipitation patterns and storm development, offering context for the prediction of weather conditions along an aircraft's route), or the like. Each of the images 106, 108, 110 can be from sensors on different platforms, such as an unmanned or manned aerial vehicle, a satellite, a manned or unmanned ground vehicle, a watercraft, a stationary platform connected to the surface of the Earth, or the like.

The weather prediction 124 can be for one or more weather parameters. The weather parameters can include temperature (e.g., actual, apparent, or a combination thereof), pressure, precipitation type (e.g., snow, rain, hail, mist, or the like), quantity, or a combination thereof, wind (velocity, direction, or a combination thereof), humidity, dew point, cloud cover, ice, sun exposure, humidity, or other weather parameters.

The images 106, 108, 110 may not be complete. A complete image includes data for each pixel of the image. An incomplete image includes one or more pixels that are missing corresponding values or includes values that are not informative or inconsistent. A non-informative or inconsistent value can be an extreme value (a maximum or minimum possible value). A missing value can be indicated by an empty pixel, a pixel with a specified value, or the like. If an image is incomplete, the weather aggregator 102 can execute an interpolation operation 128 to determine a value for the missing, non-informative, or inconsistent value. Interpolation techniques are known and any interpolation technique, such as linear, bilinear, or other interpolation technique can be used as the interpolation operation 128.

The images 106, 108, 110 can be provided to transformers 112, 114, 116. The transformers 112, 114, 116 perform variable tokenization and standardization. Variable tokenization includes encoding each pixel entry into a token. Consider a visible image from a satellite. Each pixel can encode data that is useful for forecasting cloud coverage and determining a type of clouds. Each pixel of the satellite image can be encoded based on the brightness and color. This brightness and color can inform the amount, type, and thickness of cloud cover. Consider a radar image. The radar image can quantify a radar echo for each pixel. The radar image can provide information useful for forecasting precipitation including amount of precipitation, direction of a storm, velocity of a storm, a combination thereof, or the like. The intensity and direction of the radar echo can be encoded into tokens. Consider a lidar image. Each lidar pixel can include altitude and aerosol concentration information. Altitude and aerosol concentration can be relevant for predicting a vertical profile of the atmosphere, such as height of clouds, presence of various aerosols at various altitudes, or a combination thereof. The altitude and aerosol concentrations of each pixel can be encoded into a token. The encoding treats different measurements as individual image-like representations, making integration with other image sources within transformer model more seamless.

Encoding can occur after data extraction. For example, a lidar system can provide raw data containing altitude measurements and aerosol concentration values (potentially derived from backscatter intensity) for each point in the scanned area. Data streams for altitude and aerosol concentration can be established. For altitude a 2D grid representing the spatial area covered by the lidar scan can be generated. For every cell in the grid, a value corresponding to the altitude of the lidar point closest to that cell (might average multiple points if they fall within the same cell) can be determined and the grid can be used as an "altitude map". For aerosol concentration a similar 2D grid can be generated. For each cell, the measured aerosol concentration value of the lidar point closest to the cell can be assigned. This becomes an "aerosol density map". Both the altitude map and the aerosol density map now resemble standard grayscale images. Each pixel in these images holds a specific value related to the respective measurement. A transformer model usually has mechanisms to tokenize images. The same transformer model can be applied to these lidar-derived "images". Tokenization will likely involve downsampling the image to match the desired token resolution and encoding each pixel's value, potentially with some normalization, into a numerical token for the transformer. Lidar point clouds can be extremely dense so the point cloud might benefit from downsampling or intelligent averaging when creating "images" to avoid overwhelming the transformer with too many tokens. Normalization can help ensure altitude values and aerosol concentrations are normalized to a similar range before tokenization, so the transformer gives appropriate weight to both features.

The transformers 112, 114, 116 can standardize the encoded pixels. Standardizing the encoded pixels can include homogenizing the data ranges, using a common dataset of descriptors that can apply across the data types, a combination thereof, or the like. An output of the transformers 112, 114, 116 is standardized and normalized tokens, referred to as tokens 130, 132, 134.

There are at least a few standardization techniques including learned standardization and robust scaling plus min-max. Combining learned standardization with initial robust scaling plus min-max provides a multi-pronged solution for robust and dynamic feature standardization across diverse sensor inputs. This approach aims to mitigate outliers since initial robust scaling protects the model from the disproportionate influence of extreme data points, normalize ranges since subsequent min-max scaling brings features into consistent ranges, improving model learning efficiency, and dynamic adaptation since learned standardization introduces an adaptive element, allowing the model to fine-tune how features are scaled during training based on their contribution to prediction accuracy.

Learned standardization and robust scaling plus min-max can be applied channel wise across data sources. Robust scaling can be used initially for each color channel (visible) or temperature bands (infrared), followed by min-max scaling to generate values in the range 0-1 or a different, physically relevant range. For weather radar robust scaling on radar reflectivity can help provide resilience against extreme precipitation outliers. Subsequent min-max scaling can be either globally or within specific intensity ranges. For lidar, robust scaling can be applied to altitude and aerosol density maps, then potentially min-max can be applied to normalize them globally or to a range relevant for cloud formation predictions. For learned standardization a transformer can learn optimal scaling factors for features during the training process and then be applied to the data sources, offering greater adaptability than pre-defined scalers.

After extracting features from sensor sources, the features can be embedded into a suitable vector representation. A transformer (or a simpler neural network) that takes these feature embeddings as input and outputs scaling factors (and potentially shifts) to apply to each feature can be applied to the vector representation. The transformer can learn, concurrently with feature extraction and prediction tasks, the optimal scaling factors and shifts. A vector can be of the form (data, time, location), where data indicates a value for a given weather parameter, time indicates a time at which the value for the data was gathered, and location indicates a geographic position about which the data was gathered.

The tokens 130, 132, 134 can be provided to a cross-attention operator 118. The cross-attention operator 118 handles the complexity of integrating and analyzing heterogeneous data sources, such as satellite imagery, aircraft weather radar imagery, and LiDAR images. The output of the cross-attention operator 118 can be used to predict weather conditions with high precision. The output of the cross-attention operator 118 includes data indicating a relevance of the heterogenous data input. The cross-attention operator 118 applies attention to the tokens 130, 132, 134 to determine the relevance. The cross-attention operator 118 assesses the relevance of each token 130, for example, in the context of the tokens 132, 134 from another image source. The cross-attention operator 118 applies attention for each token 130, for example, with regard to all tokens 132, 134 of other data sources. This allows the cross-attention operator 118 to evaluate the significance of specific features represented by the tokens 130, 132, 134 in relation to one another across both temporal and spatial dimensions. The cross-attention operator 118 weights the tokens 130, 132, 134 to focus on the information most pertinent to an aspect of weather prediction. For example, the cross-attention operator 118 can compare a particular token in a satellite image with features represented by one or more tokens in radar and lidar data to understand how they relate to each other in both spatial and temporal dimensions.

When combining sensor sources with different geographic resolutions and coverages, knowing the geographic origin of each feature can be important for proper geographic alignment. Some methods for embedding geographic information in tokens can include coordinate encoding, geohashing, relative positioning, or a combination thereof. Coordinate encoding can include latitude and longitude directly within the token representation for each pixel/feature. Normalization can be used if an area of interest has a large latitudinal range. For geohashing, the area of interest can be divided into a grid. Each grid cell can be encoded using a geohash (a compact alphanumeric representation of location). The geohash can be included as part of the token. Relative positioning includes, when working with aircraft, encoding sensor readings relative to the position of the aircraft. The distance and the bearing from the aircraft can be leveraged to determine the relative position. The distance and bearing can be included in the relative position. A coarse geohash can be used with a finer-grained geolocation technique for a multi-resolution representation.

The transformer can leverage this geographic metadata in several ways. Using focused attention, the transformer can be directed to prioritize interactions between tokens. The priority can be for spatial proximity and then weather flow patterns. For spatial proximity features from nearby geographic locations are more likely to be directly related (e.g., cells within the same storm system). Weather flow patterns pay attention to features upstream of a location based on prevailing wind directions. This can help predict the movement of weather phenomena.

In implementation distance calculations, if using coordinates or relative positioning, distances can be calculated between token pairs. Attention computations between tokens with very large geographic distances between them can be down weighted, ignored, or otherwise not considered. Learnable parameters can be introduced into a transformer's attention mechanism that bias it towards geographically relevant interactions.

The cross-attention operator 118 can apply the following algorithm in which S1 and S2 are token sequences. Calculate keys and value from S1. Calculate queries from S2. Determine attention matrix from keys and queries. Apply queries to the attention matrix to generate an output sequence. The output sequence has dimension and length of S2. In an equation, this can be expressed as:

$$softmax((W_Q S_2)(W_Q S_1)^T)W_V S_1$$

Where $W_Q$ is the calculated queries, $W_K$ is the calculated keys, and $W_V$ is the calculated values.

The focused analysis provided by cross-attention discerns complex relationships between different types of weather data. The complex relationships can include, for example, how cloud formations in satellite images relate to precipitation patterns in radar data. By understanding these relationships, a model can make more accurate predictions about weather phenomena like precipitation changes and turbulence, improving its forecasting capabilities across various regions and timescales. Through this comparative analysis, the cross-attention operator 118 reveals complex relationships that exist between different aspects of the weather data. For example, the cross-attention operator 118 can analyze how the spatial distribution of cloud formations in satellite images correlates with the temporal evolution of storm systems as depicted in radar data. This capacity to relate spatial features with temporal dynamics can help in understanding and predicting the development of weather phenomena, such as over short time scales.

In other words, the cross-attention operator 118 facilitates a multidimensional comprehension of weather conditions by integrating insights from multiple data sources. This integration allows for a more holistic understanding of weather phenomena, where spatial patterns seen in one type of data can inform the interpretation of temporal patterns in another, and vice versa. By synthesizing insights from disparate data dimensions, the cross-attention operator 118 improves the accuracy of a weather prediction. This is particularly evident in the forecasting of precipitation changes, where the ability to correlate spatial and temporal data leads to more precise predictions over short lead times, ranging from 5 to 90 minutes. This level of temporal granularity and predictive accuracy is a marked improvement over conventional models, which may not fully exploit the rich, multidimensional nature of weather data.

Alternatively cross-attention can be combined, in a hybrid approach, with local self-attention. The hybrid approach, leverages strengths of both local self-attention and cross-attention. Local self-attention efficiently extracts localized weather patterns and relationships within each sensor modality. Cross-attention Enables focused learning of interactions between different data sources (satellite, radar, lidar), which can help accurate nowcasting. For the hybrid approach, input data can be preprocessed and tokenized as before. Geographic metadata (geolocation information) can be embedded in the tokens. A local self-attention layer can be applied to each data modality (satellite, radar, lidar). The attention calculation can be restricted to a neighborhood around each token. This promotes the learning of spatial relationships within an image frame and temporal patterns within a sequence of images from the same source. The outputs of the local self-attention layers can be used as input to a cross-attention. Cross-attention can be applied across these outputs, facilitating the fusion of information between sensor modalities. Geographic metadata in tokens allows the model to prioritize geographically relevant interactions during this stage. Using this hybrid approach provides advantages of hierarchical learning, efficiency, and interpretability. Hierarchical learning means the model learns both localized patterns within each data type and crucial cross-modal dependencies for nowcasting. The efficiency is from local self-attention which can improve computational efficiency compared to cross-attention across the full input data. For interpretability the hybrid approach offers insights into how the model leverages both spatial/temporal cues within a modality and relationships across modalities.

The physics-based weather model 104 produces a weather prediction 124 for a specific geographic region at a specific time or range of times. The physics-based weather model 104 uses systems of differential equations that are derived based on the laws of physics to predict future weather. The laws of physics regard fluid motion, chemistry, thermodynamics, and radiative transfer. Example physics-based weather models include global circulation models and regional weather models. Global circulation models are among the most complex numerical weather prediction (NWP) models. Global circulation models simulate the entire Earth's atmosphere and oceans, based on fundamental physical laws (conservation of mass, momentum, energy, etc.). Global circulation model are used for long-range forecasting (days to weeks) and climate studies. Example global circulation models include GFS (Global Forecast System) by National Oceanic and Atmospheric Administration (NOAA), ECMWF (European Centre for Medium-Range Weather Forecasts) model, and UKMO (UK Met Office) Unified Model. Regional weather models focus on a specific geographic area with higher spatial resolution. Regional weather models often take boundary conditions from a global model. Regional weather models are typically used for shorter-term, more detailed regional predictions. Examples of regional weather models include WRF (Weather Research and Forecasting) model, which is a widely used, flexible system, HRRR (High-Resolution Rapid Refresh) which is an NOAA model for very short-term, high-resolution forecasts over the US, and NAM (North American Mesoscale) model.

A Bayesian ensemble model 120 generates an updated weather prediction 126 based on the weather prediction 124 from the physics-based weather model 104 and the weighted tokens 136 from the cross-attention operator 118. The Bayesian ensemble model 120 generates the updated weather prediction 126 by a weighted average of the weighted tokens 136 and the weather prediction 124. The weights of the weighted average can be determined using a Bayes information criterion, an Akaike information criterion, Bayesian model combination, stacking, or another weighting technique.

The updated weather prediction 126 is more accurate than a prediction associated with the weighted tokens 136 by themselves and is also more accurate than the weather prediction 124 provided by the weather model 104. The updated weather prediction 124 can be used by a variety of applications, such as a weather app, a flight plan optimizer 122 or other path plan optimizer, or the like.

The flight plan optimizer 122 provides a flight path to an aircraft navigation system. The aircraft navigation system operates the aircraft to traverse the flight path. The flight path is typically chosen to optimize some cost. The cost can include fuel consumption, flight time, flight distance, a combination thereof, or the like. A flight plan optimizer is a computer program or system designed to help pilots and airlines create the most efficient and safe flight plans possible. A majority of flight plan optimizers include route optimization, which analyzes various factors to determine the optimal flight path between an origin and destination airport. These factors can include weather conditions (wind speed/direction, turbulence, icing), air traffic control (ATC) restrictions and delays, fuel efficiency (considering factors like wind and altitude for optimal fuel burn), and flight time minimization. The flight plan optimizer 122 ensures the flight plan adheres to all airspace regulations, performance limitations of the aircraft, and pilot qualifications. The flight plan optimizer 122 may consider factors like fuel costs, landing fees, and crew scheduling to create a cost-effective route. The flight plan optimizer can provide real-time updates, such as by integrating with real-time weather data and ATC information to suggest modifications to the flight plan during the flight, for better efficiency or safety. The benefits of flight plan optimization can include reduced fuel consumption including optimized routing based on weather and other factors can significantly lower fuel burn, translating to cost savings and environmental benefits, shorter flight times by finding the most efficient path can save valuable time in the air, improved safety through weather avoidance and efficient routing can contribute to a safer flight, reduced emissions by lower fuel consumption which leads to a decrease in greenhouse gas emissions, and operational efficiency such as from optimizing their flight operations and crew scheduling.

Using the system 100, after the image pixel data is converted into tokens, the tokens can be fed into the cross-attention operator 118. Forming the tokens can include image patching which can include dividing image into a grid of non-overlapping patches (e.g., 16x16 patches of pixels or other size patch). Each patch essentially becomes a raw "word" (though unlike natural language it does not have inherent meaning). Each patch can be transformed into a vector of a chosen dimension, such as by a linear projection. This can help the transformer process the image. The patch can be flattened and used directly (high-dimensional). A convolutional neural network (CNN) can be trained to generate a more compact and meaningful embedding from each patch. Since transformers do not have an inherent understanding of spatial relationships, positional information can be added to the patch embeddings. This helps the model understand the relative arrangement of image patches. Additionally or alternatively, learned 1D positional embeddings can be used. The patching, projection, and positional encoding can be applied directly to satellite, radar, or lidar-derived image data individually. Images from different sources can alternatively be patched and embedded individually. Optionally, one can concatenate the embeddings from corresponding patches across different image types (satellite patch + radar patch + lidar patch) before adding positional encoding. The patch size is variable and the 16x16 choice impacts the level of detail that the model focuses on. One can experiment to find a patch resolution that reveals the weather features relevant to the forecasting goals. Regarding the dimensions of an embedding, a balance between representational power and computational cost can be gained. If working with data at different native resolutions, one can ensure patching and embedding processes result in tokens aligned across modalities.

The cross-attention operator 118 can then analyze the tokens in conjunction, allowing it to draw correlations and insights across the different data types. For instance, it might correlate a certain type of cloud cover (from the satellite token) with specific precipitation patterns (from the radar token) and particular atmospheric conditions (from the Lidar token), leading to a more accurate prediction of weather events like rainfall or storm development in the area of interest.

The tokenization process ensures that the cross-attention operator 118 can efficiently and effectively utilize diverse data sources, leading to more nuanced and accurate weather predictions. The cross-attention operator 118 is a highly discerning lens that scrutinizes each data token from, for example, a satellite image, and compares it with all tokens derived from radar and Lidar data. For instance, it might analyze a token representing a particular cloud formation in a satellite image and assess its relevance by comparing it with tokens indicating moisture levels from Lidar data and precipitation rates from radar data. This comparison is not just limited to a single point in time but extends across different times, offering a comprehensive view of how weather phenomena evolve over time. This detailed comparison and analysis allow the model to uncover intricate relationships between various weather data types. For example, the cross-attention operator 118 can identify a specific cloud formation in a satellite image that, when combined with certain radar and Lidar data patterns, frequently precedes heavy precipitation. By recognizing these patterns, the cross-attention operator 118 enhances its predictive accuracy for weather events such as rain or turbulence.

Consider a scenario in which satellite imagery shows a rapidly developing cumulonimbus cloud. The cross-attention operator 118 identifies this feature and assesses its significance by comparing it with recent radar data showing increasing precipitation rates and Lidar data indicating rising moisture levels in the same region. Through this analysis, the cross-attention operator 118 helps predict not only the likelihood of an imminent downpour but also potential turbulence. Combined with a flight plan optimizer that uses the updated weather prediction 126, pilots can be advised and air traffic controllers can reroute or delay flights accordingly.

By employing the cross-attention operator 118, the system 100 leverages the strengths of diverse data sources, offering a nuanced understanding of weather dynamics. After integrating and analyzing data from various sources via transformers 112, 114, 116 and cross-attention operator 118, the system 100 employs the Bayesian ensemble model 120 to consolidate the forecasts from both the physics-based weather model 104 models and a decoder network 138, which generates a weather prediction 140 based on the weighted tokens 136.

Input to the decoder network 138 can include the weighted tokens 136 output by transformer network 118. These tokens 136 contain an encoded representation of the complex relationships discovered within satellite, radar, lidar image data, other data, a combination thereof, or the like. To enhance predictive accuracy, the decoder network 138 can further take as input as a geographic location for understanding spatially dependent weather patterns, time of year that can aid in accounting for seasonal weather variations, a potential physics-based model outputs that can directly include guidance from NWP model has the potential to refine the decoder's understanding, or a combination thereof.

The decoder network 138 can include various neural network (NN) elements tailored to needs such as fully connected layers, recurrent layers, learned upsampling, a combination thereof, or the like. The fully connected layers form the backbone of the decoder network 138, transforming the abstract tokens into a representation closer to real-world weather values. The complexity of these layers influences the flexibility of the decoder network 138. The recurrent layers, such as long-short term memory (LSTM), gated-recurrent units (GRUs), or the like, can incorporate a memory of past weather states, enabling the decoder network 138 to predict how weather parameters (like storm intensity) might evolve over time. Upsampling increases the spatial resolution of predictions. Through techniques like transposed convolutions, the decoder network 138 can generate more localized predictions than the initial coarse tokenization might support.

The decoder network 138 can produce a weather prediction 140 that includes numerical values for weather parameters, such as temperature, precipitation intensity (rainfall rate, etc.), wind speed and direction, or other parameters based on forecasting requirements. The decoder network 138 can produce uncertainty estimates. The decoder network 138 can quantify the uncertainty associated with each prediction. Uncertainty can be determined by generating a distribution of possible values rather than single fixed points. This uncertainty can help inform downstream decision-making that operates based on the weather prediction 140.

The decoder network 138 can include a regression model, such as to help fine-tune a preliminary weather prediction into the weather prediction 140. The regression model can help correct biases if the decoder network 138 consistently overestimates or underestimates values, apply calibrations based on historical performance and known error tendencies, and smooth out potential noise in the raw decoder network 138 predictions.

A classification model of the decoder network 138 can take the output of a decoder and assign it to predefined class. For example, the decoder network 138 can generate a wind speed, and the classification model can produce a classification of the wind speed, such as "low wind", "moderate wind", and "high wind".

The regression and classification refines the forecasts by applying quantitative and categorical predictive models:

Quantitative Predictions: Regression models predict continuous weather parameters, providing specific values such as rainfall intensity, wind speeds, and temperature variations.

Categorical Predictions: Classification models categorize the weather events, identifying scenarios like clear skies, fog conditions, or thunderstorms.

The updated weather prediction 126 is a final (e.g., comprehensive), more accurate forecast than the weather prediction 124. The updated weather prediction 126 is more accurate because it combines insights from both the physics-based weather model 104 and the images 106, 108, 110. This detailed forecast is then utilized, such as by the flight plan optimizer 122, which crafts optimal flight paths to enhance safety and efficiency based on the predicted weather conditions.

A dynamic feedback loop, that includes feedback of the weather prediction 140, the updated weather prediction 126, corresponding weighted tokens, a flight plan from the flight plan optimizer 122, a combination thereof, or the like, can indicate real-time flight plan adjustments that contribute to the Weather Aggregator 102 learning, allowing the system to adapt and improve over time. This adaptive feedback enhances the accuracy of future predictions, ensuring that the system evolves with the changing patterns of weather and flight operations.

In operation, the weather aggregator 102 generates the updated weather prediction 126. The flight plan optimizer 122 leverages this weather prediction 126 to create an initial flight plan. As the aircraft flies along its route, it encounters real-world weather conditions. Pilots or onboard systems might adjust the flight plan in response to unexpected weather conditions (e.g., deviations around a storm cell). Aircraft observations, such as from the aircraft collecting weather data (temperature, wind, turbulence, etc.) along their flight paths can be obtained. Any modifications made to the original flight plan can be recorded. The real-time observations from the aircraft can help enrich the Weather Aggregator 102 understanding of atmospheric conditions, supplementing satellite, radar, and ground station data. The flight plan deviations provide a valuable dataset including the conditions that necessitated a deviation can be compared with the original nowcast and can help identify areas where system might benefit from improvement - whether that's in the physics-based model, the deep learning model, or their fusion. The weather aggregator 102, physics-based weather model 104, or both can later be retrained. The weighted tokens 136 can be refined, such as to update the fusion parameters based on this feedback data. For deep learning models, one could investigate techniques for continuous or online learning to allow for faster adaptation.

For hygrometer data, data preprocessing can include format conversion, such as to ensure the hygrometer data is in a digital format compatible with weather aggregator 102 model input. This might involve extracting raw readings from the sensor and converting them into relative humidity percentages. The hygrometer data can further include time synchronization, such as to Align the hygrometer readings with the timestamps of other sensor data (satellite imagery, radar, etc.). This ensures that the weather aggregator 102 model analyzes data from the same time window for all sources. Preprocessing the hygrometer data can include spatial alignment such as to associate the hygrometer readings with geographic coordinates. If the hygrometer is onboard an aircraft, the aircraft global positioning system (GPS) data can be used to determine its location at the time of the reading. This adds spatial context to the hygrometer data. The preprocessed hygrometer features can be converted into numerical tokens that the transformer 112, 114, 116 model can understand. The hygrometer data tokens can be combined with existing image-derived tokens, creating a combined representation of the weather situation.

For ice detector data, existing weather models often predict areas where icing is likely. Ice detector data can be used to calibrate these models, pinpointing exactly where icing is occurring and refining the predictions for future flights in similar conditions. Preprocessing the ice detector data can include format standardization that converts ice detection sensor readings to a standardized format that the weather aggregator 102 model can understand, potentially indicating the presence of ice, severity/rate of accumulation, or any sensor-specific metrics. The aircraft that produced the ice detector data can produce GPS coordinates for when the ice detection activates. The GPS readings can thus be associated with a precise location. Ice detector activation times can also be associated with the ice detector data to get a more complete picture of ice formation. The transformers 112, 114, 116, and cross-attention 118 can be applied to the ice detector data. The ice detector data can thus be tokenized along with other sensor data tokens and correlations between ice detection and patterns in radar, satellite imagery, and other feature sets can be discovered.

For wind sensor data, such as from a wind vane or Pitot tube, preprocessing the data can include extracting the raw wind speed and direction readings from the onboard wind sensors (vanes, Pitot tubes, or whatever is used). The wind speed data can be normalized relative to true north. This aligns the data with other meteorological datasets for easier model use. As with other sensors, a timestamp can be added to all wind readings and associate them with the aircraft's geolocation at the time of the measurement. Features of the wind data can include the wind data as vectors, where the magnitude corresponds to wind speed and the direction indicates the flow of the wind. The differences in wind speed and direction over a defined area surrounding the aircraft's location can be gathered by a given airplane. This can indicate wind shear and potential turbulence zones along the aircraft.

Changes in wind data over time intervals (e.g., increasing wind speed, a sudden shift in wind direction) can be analyzed by the weather aggregator 102 and can indicate developing weather patterns. The wind data can be tokenized into features (vectors, gradients, trends) into tokens the transformer model can understand. The wind data tokens can be embedded alongside existing image-based tokens and other sensor tokens (temperature, humidity, etc.). The cross-attention operator 118 can be applied to discover complex interactions between wind patterns and the visual features derived from radar and satellite imagery or other data.

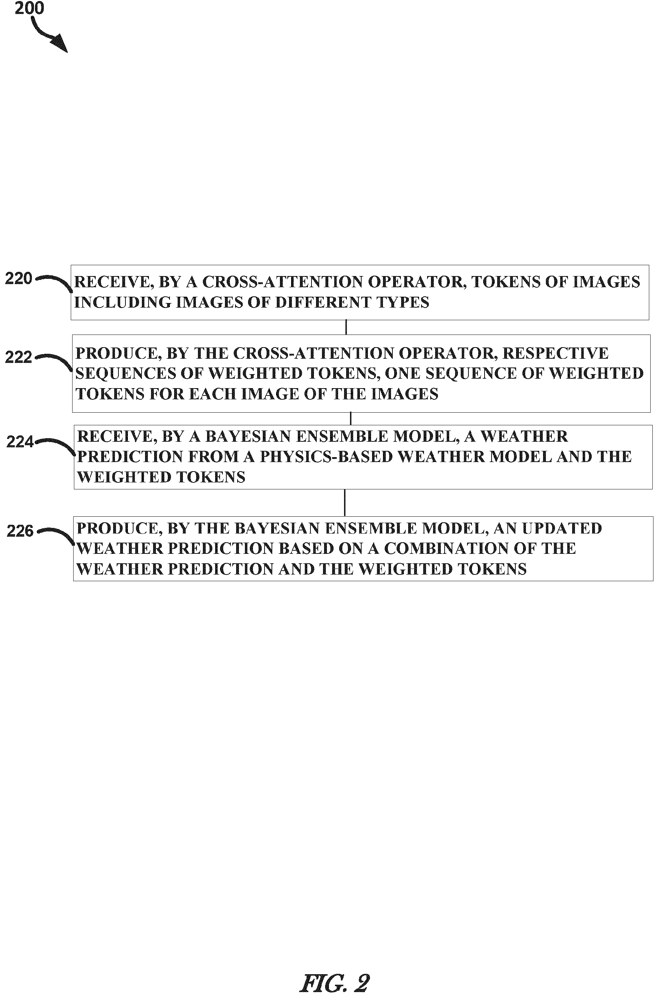

FIG. 2 illustrates, by way of example, a diagram of an embodiment of a method 200 for improved weather prediction. The method 200 as illustrated includes receiving, by a cross-attention operator, tokens of images including images of different types, at operation 220; producing, by the cross-attention operator, respective sequences of weighted tokens, one sequence of weighted tokens for each image of the images, at operation 222; receiving, by a Bayesian ensemble model, a weather prediction from a physics-based weather model and the weighted tokens, at operation 224; and producing, by the Bayesian ensemble model, an updated weather prediction based on a combination of the weather prediction and the weighted tokens, at operation 226.

The types can include two or more of (i) a visible image, (ii) a radar image, (iii) a lidar image, or (iv) an infrared image. The types can include the visible image, the radar image, and the lidar image.

The method 200 can further include generating, by a transformer for each image, a sequence of tokens based on a received image of the images. The method 200 can further include receiving, by the cross-attention operator, a sequence of tokens for each image. The method 200 can further include generating, by the cross-attention operator, the weighted tokens based on all sequences of tokens.

The method 200 can further include determining, by an interpolation operator, a pixel value for an image of the images that is undefined, empty, or otherwise not available. The method 200 can further include standardizing, by the transformer, all tokens of all sequences of tokens.

The method 200 can further include receiving, by a flight plan optimizer, the updated weather prediction and generating, by the flight plan optimizer, a flight plan based on the updated weather prediction. Tokens of the visible image can represent type and thickness of cloud cover. Tokens of the radar image can represent amount of precipitation and direction of clouds associated with the precipitation. Tokens of the lidar image can represent altitude and aerosol concentration. The images can include a field of view of a geographic region that overlaps with the weather prediction.

AI is a field concerned with developing decision-making systems to perform cognitive tasks that have traditionally required a living actor, such as a person. NNs are computational structures that are loosely modeled on biological neurons. Generally, NNs encode information (e.g., data or decision making) via weighted connections (e.g., synapses) between nodes (e.g., neurons). Modern NNs are foundational to many AI applications, such as classification, device behavior modeling (as in the present application) or the like. The transformer 112, 114, 116, cross-attention operator 118, Bayesian ensemble model 120 or other component or operation can include or be implemented using one or more NNs.

Many NNs are represented as matrices of weights (sometimes called parameters) that correspond to the modeled connections. NNs operate by accepting data into a set of input neurons that often have many outgoing connections to other neurons. At each traversal between neurons, the corresponding weight modifies the input and is tested against a threshold at the destination neuron. If the weighted value exceeds the threshold, the value is again weighted, or transformed through a nonlinear function, and transmitted to another neuron further down the NN graph-if the threshold is not exceeded then, generally, the value is not transmitted to a down-graph neuron and the synaptic connection remains inactive. The process of weighting and testing continues until an output neuron is reached; the pattern and values of the output neurons constituting the result of the NN processing.

The optimal operation of most NNs relies on accurate weights. However, NN designers do not generally know which weights will work for a given application. NN designers typically choose a number of neuron layers or specific connections between layers including circular connections. A training process may be used to determine appropriate weights by selecting initial weights.

In some examples, initial weights may be randomly selected. Training data is fed into the NN, and results are compared to an objective function that provides an indication of error. The error indication is a measure of how wrong the NN's result is compared to an expected result. This error is then used to correct the weights. Over many iterations, the weights will collectively converge to encode the operational data into the NN. This process may be called an optimization of the objective function (e.g., a cost or loss function), whereby the cost or loss is minimized.

A gradient descent technique is often used to perform objective function optimization. A gradient (e.g., partial derivative) is computed with respect to layer parameters (e.g., aspects of the weight) to provide a direction, and possibly a degree, of correction, but does not result in a single correction to set the weight to a "correct" value. That is, via several iterations, the weight will move towards the "correct," or operationally useful, value. In some implementations, the amount, or step size, of movement is fixed (e.g., the same from iteration to iteration). Small step sizes tend to take a long time to converge, whereas large step sizes may oscillate around the correct value or exhibit other undesirable behavior. Variable step sizes may be attempted to provide faster convergence without the downsides of large step sizes.

Backpropagation is a technique whereby training data is fed forward through the NN-here "forward" means that the data starts at the input neurons and follows the directed graph of neuron connections until the output neurons are reached-and the objective function is applied backwards through the NN to correct the synapse weights. At each step in the backpropagation process, the result of the previous step is used to correct a weight. Thus, the result of the output neuron correction is applied to a neuron that connects to the output neuron, and so forth until the input neurons are reached. Backpropagation has become a popular technique to train a variety of NNs. Any well-known optimization algorithm for back propagation may be used, such as stochastic gradient descent (SGD), Adam, etc.

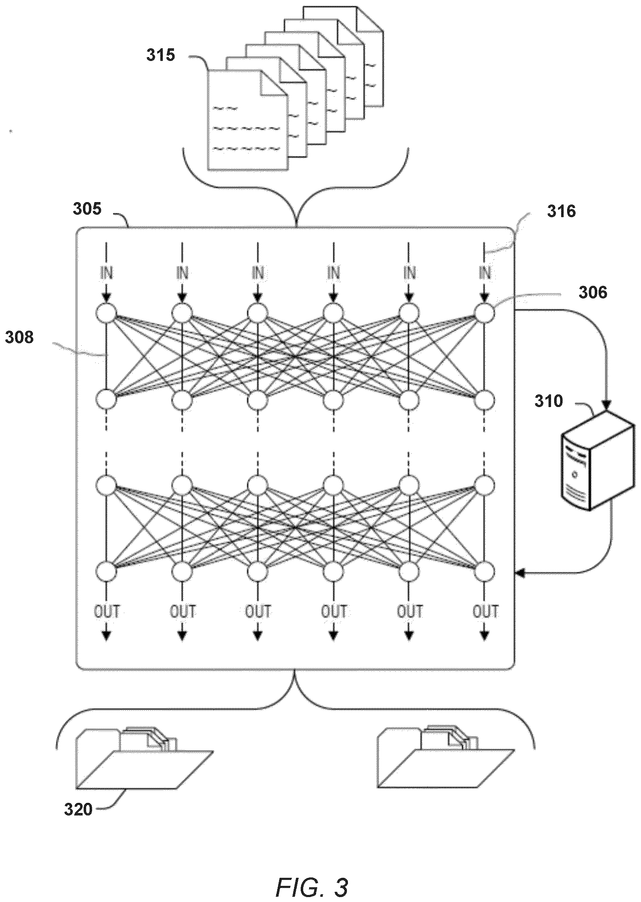

FIG. 3 is a block diagram of an example of an environment including a system for neural network (NN) training. The system includes an artificial NN (ANN) 305 that is trained using a processing node 310. The processing node 310 may be a central processing unit (CPU), graphics processing unit (GPU), field programmable gate array (FPGA), digital signal processor (DSP), application specific integrated circuit (ASIC), or other processing circuitry. In an example, multiple processing nodes may be employed to train different layers of the ANN 305, or even different nodes 306 within layers. Thus, a set of processing nodes 310 is arranged to perform the training of the ANN 305. The transformer 112, 114, 116, cross-attention operator 118, Bayesian ensemble model 120, or the like, can be trained using the system of FIG. 3.

The set of processing nodes 310 is arranged to receive a training set 315 for the ANN 305. The ANN 305 comprises a set of nodes 306 arranged in layers (illustrated as rows of nodes 306) and a set of inter-node weights 308 (e.g., parameters) between nodes in the set of nodes. In an example, the training set 315 is a subset of a complete training set. Here, the subset may enable processing nodes with limited storage resources to participate in training the ANN 305.

The training data may include multiple numerical values representative of a domain, such as an image feature, or the like. Each value of the training or input 315 to be classified after ANN 305 is trained, is provided to a corresponding node 306 in the first layer or input layer of ANN 305. The values propagate through the layers and are changed by the objective function.

As noted, the set of processing nodes is arranged to train the neural network to create a trained neural network. After the ANN is trained, data input into the ANN will produce valid classifications 320 (e.g., the input data 315 will be assigned into categories), for example. The training performed by the set of processing nodes 306 is iterative. In an example, each iteration of the training the ANN 305 is performed independently between layers of the ANN 305. Thus, two distinct layers may be processed in parallel by different members of the set of processing nodes. In an example, different layers of the ANN 305 are trained on different hardware. The members of different members of the set of processing nodes may be located in different packages, housings, computers, cloud-based resources, etc. In an example, each iteration of the training is performed independently between nodes in the set of nodes. This example is an additional parallelization whereby individual nodes 306 (e.g., neurons) are trained independently. In an example, the nodes are trained on different hardware.

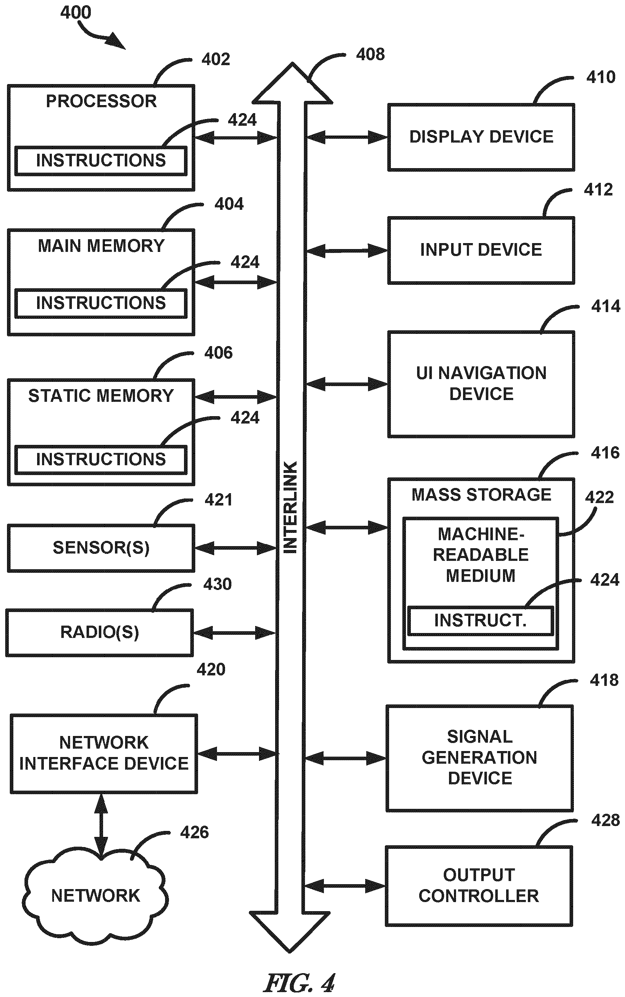

FIG. 4 illustrates, by way of example, a block diagram of an embodiment of a machine in the example form of a computer system 400 within which instructions, for causing the machine to perform any one or more of the methods or techniques discussed herein, may be executed. One or more of the interpolation operator 128, transformer 112, 114, 116, cross-attention operator 118, Bayesian ensemble model 120, physics-based weather model 104, flight plan optimizer 122, method 200, system of FIG. 3, or other component, operation, or technique, can include, or be implemented or performed by one or more of the components of the computer system 400. In a networked deployment, the machine may operate in the capacity of a server or a client machine in server-client network environment, or as a peer machine in a peer-to-peer (or distributed) network environment. The machine may be a personal computer (PC), server, a tablet PC, a cellular telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 400 includes a processor 402 (e.g., a central processing unit (CPU), a graphics processing unit (GPU) or both), a main memory 404 and a static memory 406, which communicate with each other via a bus 408. The computer system 400 may further include a video display unit410 (e.g., a liquid crystal display (LCD) or a cathode ray tube (CRT)). The computer system 400 also includes an alphanumeric input device 412 (e.g., a keyboard), a user interface (UI) navigation device 414 (e.g., a mouse), a mass storage unit 416, a signal generation device 418 (e.g., a speaker), a network interface device 420, and a radio 430 such as Bluetooth, WWAN, WLAN, and NFC, permitting the application of security controls on such protocols.

The mass storage unit 416 includes a machine-readable medium 422 on which is stored one or more sets of instructions and data structures (e.g., software) 424 embodying or utilized by any one or more of the methodologies or functions described herein. The instructions 424 may also reside, completely or at least partially, within the main memory 404 and/or within the processor 402 during execution thereof by the computer system 400, the main memory 404 and the processor 402 also constituting machine-readable media.

While the machine-readable medium 422 is shown in an example embodiment to be a single medium, the term "machine-readable medium" may include a single medium or multiple media (e.g., a centralized or distributed database, and/or associated caches and servers) that store the one or more instructions or data structures. The term "machine-readable medium" shall also be taken to include any tangible medium that is capable of storing, encoding, or carrying instructions for execution by the machine and that cause the machine to perform any one or more of the methodologies of the present invention, or that is capable of storing, encoding, or carrying data structures utilized by or associated with such instructions. The term "machine-readable medium" shall accordingly be taken to include, but not be limited to, solid-state memories, and optical and magnetic media. Specific examples of machine-readable media include non-volatile memory, including by way of example semiconductor memory devices, e.g., Erasable Programmable Read-Only Memory (EPROM), Electrically Erasable Programmable Read-Only Memory (EEPROM), and flash memory devices; magnetic disks such as internal hard disks and removable disks; magneto-optical disks; and CD-ROM and DVD-ROM disks.

The instructions 424 may further be transmitted or received over a communications network 426 using a transmission medium. The instructions 424 may be transmitted using the network interface device 420 and any one of a number of well-known transfer protocols (e.g., HTTPS). Examples of communication networks include a local area network ("LAN"), a wide area network ("WAN"), the Internet, mobile telephone networks, Plain Old Telephone (POTS) networks, and wireless data networks (e.g., WiFi and WiMax networks). The term "transmission medium" shall be taken to include any intangible medium that is capable of encoding, or carrying instructions for execution by the machine, and includes digital or analog communications signals or other intangible media to facilitate communication of such software.

Additional Examples

Example 1 includes a weather prediction system comprising a cross-attention operator configured to (i) receive tokens representing pixels of images, the images includes images of different types and (ii) produce, based on the tokens, respective sequences of weighted tokens, one sequence of weighted tokens for each image of the images, and a Bayesian ensemble model configured to (i) receive a weather prediction from a physics-based weather model and the weighted tokens and (ii) produce an updated weather prediction based on a combination of the weather prediction and the weighted tokens.

In Example 2, Example 1 further includes, wherein the types include two or more of (i) a visible image, (ii) a radar image, (iii) a lidar image, or (iv) an infrared image.

In Example 3, Example 2 further includes, wherein the types include the visible image, the radar image, and the lidar image.

In Example 4, at least one of Examples 1-3 further includes a transformer for each image, the transformer configured to generate, based on a received image of the images, the tokens, the tokens part of respective sequences of tokens, wherein the cross-attention operator is configured to receive a sequence of tokens for each image and generate the weighted tokens based on all sequences of tokens.

In Example 5, Example 4 further includes an interpolation operator configured to determine a pixel value for an image of the images that is undefined, empty, or otherwise not available.

In Example 6, at least one of Examples 4-5 further includes, wherein the transformer is configured to standardize all tokens of all sequences of tokens.

In Example 7, at least one of Examples 1-6 further includes a flight plan optimizer configured to receive the updated weather prediction and generate a flight plan based on the updated weather prediction.

In Example 8, at least one of Examples 3-7 further includes, wherein tokens of the visible image represent type and thickness of cloud cover, of the radar image represent amount of precipitation and direction of clouds associated with the precipitation, and of the lidar image represent altitude and aerosol concentration.

In Example 9, at least one of Examples 1-8 further includes, wherein the images include a field of view of a geographic region that overlaps with the weather prediction.

Example 10 includes a method of implementing operations of the system of at least one of Examples 1-9.

Example 11 includes a non-transitory machine-readable medium including instructions that, when executed by a machine, cause the machine to perform operations of the system of at least one of Examples 1-9.

Although teachings have been described with reference to specific example teachings, it will be evident that various modifications and changes may be made to these teachings without departing from the broader scope of the invention as defined in the appended claims. Accordingly, the specification and drawings are to be regarded in an illustrative rather than a restrictive sense. The accompanying drawings that form a part hereof, show by way of illustration, and not of limitation, specific teachings in which the subject matter may be practiced. The teachings illustrated are described in sufficient detail to enable those skilled in the art to practice the teachings disclosed herein. Other teachings may be utilized and derived therefrom, such that structural and logical substitutions and changes may be made without departing from the scope of the invention as defined by the appended claims. This Detailed Description, therefore, is not to be taken in a limiting sense, and the scope of various teachings is defined only by the appended claims.

## Claims

1. A weather prediction system comprising:

   a cross-attention operator configured to (i) receive tokens representing pixels of images, the images includes images of different types and (ii) produce, based on the tokens, respective sequences of weighted tokens, one sequence of weighted tokens for each image of the images; and
   a Bayesian ensemble model configured to (i) receive a weather prediction from a physics-based weather model and the weighted tokens and (ii) produce an updated weather prediction based on a combination of the weather prediction and the weighted tokens.

2. The system of claim 1, wherein the types include two or more of (i) a visible image, (ii) a radar image, (iii) a lidar image, or (iv) an infrared image.

3. The system of claim 2, wherein the types include the visible image, the radar image, and the lidar image; and, optionally,
   wherein tokens:

   of the visible image represent type and thickness of cloud cover,
   of the radar image represent amount of precipitation and direction of clouds associated with the precipitation, and
   of the lidar image represent altitude and aerosol concentration.

4. The system of any preceding claim, further comprising a transformer for each image, the transformer configured to generate, based on a received image of the images, the tokens, the tokens part of respective sequences of tokens, wherein the cross-attention operator is configured to receive a sequence of tokens for each image and generate the weighted tokens based on all sequences of tokens.

5. The system of claim 4, further comprising an interpolation operator configured to determine a pixel value for an image of the images that is undefined, empty, or otherwise not available; and/or
   wherein the transformer is configured to standardize all tokens of all sequences of tokens.

6. The system of any preceding claim, further comprising a flight plan optimizer configured to receive the updated weather prediction and generate a flight plan based on the updated weather prediction.

7. The system of any preceding claim, wherein the images include a field of view of a geographic region that overlaps with the weather prediction.

8. A method for improved weather prediction comprising:

   receiving, by a cross-attention operator, tokens of images including images of different types;
   producing, by the cross-attention operator, respective sequences of weighted tokens, one sequence of weighted tokens for each image of the images;
   receiving, by a Bayesian ensemble model, a weather prediction from a physics-based weather model and the weighted tokens; and
   producing, by the Bayesian ensemble model, an updated weather prediction based on a combination of the weather prediction and the weighted tokens.

9. The method of claim 8, wherein the types include two or more of (i) a visible image, (ii) a radar image, (iii) a lidar image, or (iv) an infrared image.

10. The method of claim 9, wherein the types include the visible image, the radar image, and the lidar image; and, optionally,
    wherein tokens:

    of the visible image represent type and thickness of cloud cover,
    of the radar image represent amount of precipitation and direction of clouds associated with the precipitation, and
    of the lidar image represent altitude and aerosol concentration.

11. The method of any of claims 8 to 10, further comprising:

    generating, by a transformer for each image, a sequence of tokens based on a received image of the images;
    receiving, by the cross-attention operator, a sequence of tokens for each image; and
    generating, by the cross-attention operator, the weighted tokens based on all sequences of tokens.

12. The method of claim 11, further comprising determining, by an interpolation operator, a pixel value for an image of the images that is undefined, empty, or otherwise not available; and/or

further comprising standardizing, by the transformer, all tokens of all sequences of tokens.

**13.** The method of any one of claims 8 to 12, further comprising receiving, by a flight plan optimizer, the updated weather prediction and generating, by the flight plan optimizer, a flight plan based on the updated weather prediction.

**14.** The method of any of claims 8 to 13, wherein the images include a field of view of a geographic region that overlaps with the weather prediction.

**15.** A non-transitory machine-readable medium including instructions that, when executed by a machine, cause the machine to carry out the steps of a method according to any of claims 8 to 14.

100
IMAGE TYPE 1
106
IMAGE TYPE 2
108
IMAGE TYPE 3
110
128
INTERPOLATION
112
114
116
TRANS-FORMER
TRANS-FORMER
TRANS-FORMER
102
130
132
118
134
CROSS-ATTENTION
WEIGHTED TOKENS
136
138
DECODER NETWORK
WEATHER PREDICTION
140
104
PHYSICS-BASED WEATHER MODEL
WEATHER PREDICTION
124
BAYESIAN ENSEMBLE MODEL
120
UPDATED WEATHER PREDICTION
126
WEATHER AGGREGATOR
122
FLIGHT PLAN OPTIMIZER
FIG. 1

200
220
RECEIVE, BY A CROSS-ATTENTION OPERATOR, TOKENS OF IMAGES INCLUDING IMAGES OF DIFFERENT TYPES
222
PRODUCE, BY THE CROSS-ATTENTION OPERATOR, RESPECTIVE SEQUENCES OF WEIGHTED TOKENS, ONE SEQUENCE OF WEIGHTED TOKENS FOR EACH IMAGE OF THE IMAGES
224
RECEIVE, BY A BAYESIAN ENSEMBLE MODEL, A WEATHER PREDICTION FROM A PHYSICS-BASED WEATHER MODEL AND THE WEIGHTED TOKENS
226
PRODUCE, BY THE BAYESIAN ENSEMBLE MODEL, AN UPDATED WEATHER PREDICTION BASED ON A COMBINATION OF THE WEATHER PREDICTION AND THE WEIGHTED TOKENS

*FIG. 2*

315
305
316
306
308
310
IN
OUT
320

*FIG. 3*

400
402
PROCESSOR
424
INSTRUCTIONS
404
MAIN MEMORY
424
INSTRUCTIONS
406
STATIC MEMORY
424
INSTRUCTIONS
421
SENSOR(S)
430
RADIO(S)
420
NETWORK INTERFACE DEVICE
426
NETWORK
408
INTERLINK
410
DISPLAY DEVICE
412
INPUT DEVICE
414
UI NAVIGATION DEVICE
416
MASS STORAGE
422
MACHINE-READABLE MEDIUM
424
INSTRUCT.
418
SIGNAL GENERATION DEVICE
428
OUTPUT CONTROLLER

*FIG. 4*

# EUROPEAN SEARCH REPORT

Application Number
EP 25 15 4535

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TUNG NGUYEN ET AL: "ClimaX: A foundation model for weather and climate", ARXIV.ORG, CORNELL UNIVERSITY LIBRARY, 201 OLIN LIBRARY CORNELL UNIVERSITY ITHACA, NY 14853, 6 February 2023 (2023-02-06), XP091434507, * 1. Introduction; 2.1 Data sources; 3.1 Input representation; 3.2 Model architecture; 3.2.1 Variable tokenization; 3.2.3 Transformer * ----- | 1-15 | INV. G01W1/10 G06N3/00 G06T7/00 G06V10/00 G01W1/00 |
| A | US 8 332 084 B1 (BAILEY LOUIS J [US] ET AL) 11 December 2012 (2012-12-11) * the whole document * ----- | 6,13 | |
| A | CHRISTIAN LESSIG ET AL: "AtmoRep: A stochastic model of atmosphere dynamics using large scale representation learning", ARXIV.ORG, CORNELL UNIVERSITY LIBRARY, 201 OLIN LIBRARY CORNELL UNIVERSITY ITHACA, NY 14853, 7 September 2023 (2023-09-07), XP091606088, * the whole document * ----- | 1-15 | TECHNICAL FIELDS SEARCHED (IPC)<br>G01W<br>G06T<br>G06V<br>G06N |

The present search report has been drawn up for all claims

1

| Place of search | Date of completion of the search | Examiner |
|---|---|---|
| The Hague | 25 June 2025 | Phleps, Stefanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 15 4535

This annex lists the patent family members relating to the patent documents cited in the above-mentioned European search report. The members are as contained in the European Patent Office EDP file on The European Patent Office is in no way liable for these particulars which are merely given for the purpose of information.

25-06-2025

| Patent document cited in search report | Publication date | Patent family member(s) | Publication date |
|---|---|---|---|
| US 8332084 B1 | 11-12-2012 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- IN 202411025184